# EUROPÄISCHE PATENTANMELDUNG

(11) **EP 4 740 725 A1**
(43) Veröffentlichungstag der Anmeldung: **13.05.2026**
(21) Anmeldenummer: 25207630.2
(22) Anmeldetag: 09.10.2025
(51) Int. Cl.: A01D 43/08, A01F 29/10

(54) **EINZUGSVORRICHTUNG MIT ZUEINANDER BEWEGLICHEN ABDECKELEMENTEN ZUR ABDECKUNG EINER WALZENAUSNEHMUNG**

(30) Priorität: 07.11.2024 DE 102024132521
(71) Anmelder: Maschinenfabrik Bernard Krone GmbH & Co. KG, 48480 Spelle (DE)
(72) Erfinder: Ensink, Holger, 49835 Wietmarschen (DE); Evers, Hendrik, Emsbüren (DE)

(57) **Zusammenfassung**

Die vorliegende Erfindung betrifft eine Einzugsvorrichtung (2) für einen Feldhäcksler. Die Einzugsvorrichtung ist zur Förderung von landwirtschaftlichem Erntegut in eine Einzugsrichtung (ER) durch einen Einzugskanal (4) ausgebildet. Die Einzugsvorrichtung umfasst eine Rahmenvorrichtung (40), die zumindest eine Seitenwandung (42) zur seitlichen Begrenzung des Einzugskanals umfasst. Die Einzugsvorrichtung umfasst zumindest zwei Einzugswalzenpaare (10, 20, 30), die zur Begrenzung des Einzugskanals jeweils ein drehbar gelagertes Oberwalzenelement (12, 22, 32), das sich seitlich durch zumindest eine Walzenausnehmung (13, 23, 33) in der Seitenwandungen (42) erstreckt, und ein drehbar gelagertes Unterwalzenelement (14, 24, 34) umfassen und die in die Einzugsrichtung (ER) versetzt zueinander angeordnet sind. Die Einzugsvorrichtung umfasst eine Lagerungsanordnung (50), die zu einer derartigen Lagerung der Obereinzugswalzen (12, 22, 32) ausgebildet ist, dass sie in eine Höhenrichtung (HR) beweglich sind. Die Einzugsvorrichtung umfasst eine Abdeckeinrichtung (60), die zumindest ein mittels der Lagerungsanordnung (50) relativ zur Rahmenvorrichtung (40) bewegliches, Abdeckelement (62, 64) zur Abdeckung der zumindest einen Walzenausnehmung (13, 23, 33) aufweist. Erfindungsgemäß umfasst die Abdeckeinrichtung (60) zumindest ein Zusatzabdeckelement (66) zur Abdeckung zumindest der zumindest einen Walzenausnehmung (13, 23, 33), das mittels der Lagerungsanordnung (50) relativ zur Rahmenvorrichtung (40) und relativ zum Abdeckelement (62, 64) beweglich gelagert ist.

## Beschreibung

Die Erfindung betrifft eine Einzugsvorrichtung für einen Feldhäcksler. Die Einzugsvorrichtung ist zur Förderung von landwirtschaftlichem Erntegut in eine Einzugsrichtung durch einen Einzugskanal ausgebildet. Die Einzugsvorrichtung weist eine Rahmenvorrichtung auf, die zumindest eine Seitenwandung zur seitlichen Begrenzung des Einzugskanals umfasst. Weiterhin weist die Einzugsvorrichtung zumindest zwei Einzugswalzenpaare auf, die zur Begrenzung des Einzugskanals jeweils ein drehbar gelagertes Oberwalzenelement und ein drehbar gelagertes Unterwalzenelement umfassen und die in die Einzugsrichtung versetzt zueinander angeordnet sind. Die Oberwalzenelemente erstrecken sich seitlich durch zumindest eine Walzenausnehmung in der Seitenwandung. Die Einzugsvorrichtung weist weiterhin eine Lagerungsanordnung auf, die zu einer derartigen Lagerung der Oberwalzenelemente ausgebildet ist, dass sie zu einer Variation einer Höhe des Einzugskanals relativ zur Rahmenvorrichtung zumindest anteilig in eine Höhenrichtung beweglich sind, die zur Einzugsrichtung angewinkelt ist. Weiterhin weist die Einzugsvorrichtung eine Abdeckeinrichtung auf, die zumindest ein mittels der Lagerungsanordnung relativ zur Rahmenvorrichtung bewegliches Abdeckelement zur Abdeckung der zumindest einen Walzenausnehmung aufweist.

Eine derartige Einzugsvorrichtung ist aus dem Stand der Technik bekannt. Im Einsatz dient die Einzugsvorrichtung dazu, dass Erntegut von einem mit dem Feldhäcksler gekoppelten Erntevorsatz in den Feldhäcksler einzuziehen und einer Häckseltrommel zuzuführen. Die variable Höhe des Einzugskanals dient dazu, unterschiedlich große Mengen von Erntegut gleichermaßen zuverlässig fördern zu können, und insbesondere dazu, das Erntegut zur Erreichung unterschiedlicher Schnittlängen zuverlässig mit unterschiedlichen Fördergeschwindigkeiten und daraus resultierend unterschiedlichen Dicken des Erntegutstroms im Einzugskanal der Häckseltrommel zuführen zu können.

Die Beweglichkeit der Oberwalzenelemente setzt Walzenausnehmungen voraus, die einen größeren Querschnitt haben als der darin befindliche Teil des jeweiligen Oberwalzenelementes. Damit verbleiben notwendigerweise Durchgangsöffnungen zwischen dem Einzugskanal und der Umgebung der Seitenwandung, durch die ein Teil des zu fördernden Erntegutes in der Praxis unbeabsichtigt aus dem Einzugskanal entweicht. Zur Reduzierung dieses Entweichens von Erntegut dienen beispielsweise gemäß der DE 2 149 974 A1 mehrere Abdeckelemente der Abdeckeinrichtung, wovon jedem Oberwalzenelement derart eines zugeordnet ist, dass die Abdeckelemente sich mit dem jeweiligen Oberwalzenelement zumindest anteilig in die Höhenrichtung bewegen.

Nachteilig bei der bekannten Einzugsvorrichtung ist, dass die Walzenausnehmungen durch die Abdeckeinrichtung nur unzureichend abzudecken sind. Trotz der Abdeckeinrichtung entweicht im Betrieb regelmäßig ein erheblicher Anteil des Erntegutes aus dem Einzugskanal. Das führt einerseits zu einer erheblichen Verschmutzung von Funktionsteilen und insbesondere Lagern und erhöht deren Ausfallrisiko. Das Entweichen des Erntegutes führt andererseits zu einer erheblichen Reduzierung der Ernteerträge. Besonders groß ist der beschriebene Nachteil bei einem großen Bewegungsspielraum der Oberwalzenelemente in die Höhenrichtung, insbesondere da eine Erstreckung des Abdeckelementes entgegen der Höhenrichtung durch das zugeordnete Unterwalzenelement begrenzt ist. Einem großen Bewegungsspielraum kommt jedoch eine immer größere Bedeutung zu, da je nach Erntegut und dessen Verwendungszweck einerseits die Realisierbarkeit besonders kleiner Schnittlängen und andererseits die Realisierbarkeit besonders großer Schnittlängen gefordert wird.

Aufgabe der vorliegenden Erfindung ist die Bereitstellung einer Einzugsvorrichtung, durch die Verschmutzung von Funktionsteilen und/oder Erntegutverluste insbesondere bei einer umfangreichen Beweglichkeit der Oberwalzenelemente zuverlässig zu verhindern sind.

Erfindungsgemäß wird die Aufgabe dadurch gelöst, dass die Abdeckeinrichtung zumindest ein Zwischenabdeckelement zur Abdeckung der zumindest einen Walzenausnehmung umfasst. Das Zwischenabdeckelement ist mittels der Lagerungsanordnung relativ zur Rahmenvorrichtung und relativ zum Abdeckelement beweglich gelagert.

Das Zwischenabdeckelement ermöglicht je nach Stellung der Lagerungsanordnung eine Abdeckung eines Abschnittes der Walzenausnehmung, der von dem Abdeckelement nicht abgedeckt oder abzudecken ist. Insbesondere ist durch die Lagerungsanordnung darauf zu reagieren, wo ein solcher Abschnitt entsteht, und lässt sich das Zwischenabdeckelement je nach Stellung der Lagerungsanordnung dort positionieren, wo es zur Vermeidung des Verlustes von Erntegut nötig ist.

Die Einzugsvorrichtung bildet im Einsatz den sogenannten Einzug eines Feldhäckslers. Im montierten Zustand befindet sich die Einzugsvorrichtung in einer Frontansicht des Feldhäckslers bevorzugt zwischen seinen Vorderrädern. Die Einzugsvorrichtung ist insbesondere zur Förderung von Mais, Gras und/oder Getreide ausgebildet.

Die Rahmenvorrichtung der Einzugsvorrichtung ist bevorzugt starr und unbeweglich ausgebildet. Die Rahmenvorrichtung der Einzugsvorrichtung ist bevorzugt ortsfest an einem Rahmen des Feldhäckslers montiert. Die Seitenwandung ist bevorzugt durch ein Seitenwandungsblech ausgebildet, das sich zumindest neben dem Einzugskanal flächig sowohl in die Einzugsrichtung als auch in die Höhenrichtung erstreckt. Vorzugsweise weist die Rahmenvorrichtung zwei Seitenwandungen auf, mittels derer der Einzugskanal beiderseits begrenzt wird und die insbesondere spiegelsymmetrisch zueinander angeordnet sind. Besonders bevorzugt sind die Seitenwandungen, die Einzugswalzenpaare, insbesondere abgesehen von einem Antriebselement zur Antriebsenergieaufnahme, und die Abdeckeinrichtung spiegelsymmetrisch ausgebildet, wobei nachfolgend lediglich die einseitige Ausbildung beschrieben wird.

Jedes Einzugswalzenpaar umfasst ein Oberwalzenelement, das den Einzugskanal nach oben begrenzt, und ein Unterwalzenelement, das den Einzugskanal nach unten begrenzt. Bevorzugt weist die Einzugsvorrichtung zwei oder drei Einzugswalzenpaare auf. Die Oberwalzenelemente und/oder die Unterwalzenelemente weisen bevorzugt jeweils eine in eine Querrichtung vollständig zwischen den Seitenwandungen angeordnete Einzugswalze und zumindest ein Wellenelement auf, das seitlich von der Einzugswalze absteht und sich durch die Walzenausnehmung erstreckt, d.h. die Wellenausnehmung durchsetzt. Die Seitenwandung weist insbesondere eine Walzenausnehmung pro Oberwalzenelement auf. Die Walzenausnehmungen sind dabei vorzugsweise in die Querrichtung durchgehend und bevorzugt vollumfänglich von der Seitenwandung umschlossen. An dem Wellenelement ist außerhalb des Einzugskanals insbesondere ein Antriebselement zur Drehung des jeweiligen Oberwalzenelementes angeordnet. Die Querrichtung ist sowohl zur Einzugsrichtung als auch zur Höhenrichtung rechtwinklig und insbesondere parallel zu den Drehachsen der Oberwalzenelemente ausgerichtet.

Mittels der Lagerungsanordnung sind die Oberwalzenelemente unterschiedlich weit von den Unterwalzenelementen zu beabstanden. Dadurch ist die Höhe des sich zwischen den Ober- und Unterwalzenelementen hindurch erstreckenden Einzugskanals zu variieren. Die Beweglichkeit der Oberwalzenelemente ist derart, dass sie zumindest anteilig in die Höhenrichtung beweglich sind. Damit ist insbesondere eine von der Drehung der Oberwalzenelemente unabhängige Bewegung gemeint. Dabei kann es sich um eine rein translatorische Bewegung zumindest anteilig, insbesondere ausschließlich, in die Höhenrichtung oder beispielsweise um eine Schwenkbewegung mit einem Bewegungsanteil in die Höhenrichtung handeln. Die Höhenrichtung ist bevorzugt um mehr als 45°, besonders bevorzugt um zumindest im Wesentlichen 90°, zur Einzugsrichtung angewinkelt und von den Unterwalzenelementen abgewandt. Die Beweglichkeit der Oberwalzenelemente ist in die und entgegen der Höhenrichtung reversibel möglich.

Das Abdeckelement und/oder das Zwischenabdeckelement sind/ist bevorzugt aus einem sich flächig erstreckenden Endlosmaterial wie beispielsweise einem Blech ausgebildet. Das Endlosmaterial erstreckt sich besonders bevorzugt im Wesentlichen rechtwinklig zur Querrichtung flächig. Die Seitenwandung, das Abdeckelement und das Zwischenabdeckelement sind, unabhängig von der Reihenfolge und je nach Stellung der Lagerungsanordnung zumindest teilweise in die Querrichtung aufeinander geschichtet angeordnet, wobei ihre einander zugewandten Oberflächen sich zumindest teilweise berühren. Das Abdecken bedeutet, dass bei einer Betrachtung der Seitenwandung in die oder entgegen der Querrichtung durch die zumindest eine Walzenausnehmung das Abdeckelement und/oder das Zwischenabdeckelement zu sehen ist.

Während das Abdeckelement bevorzugt derart gelagert ist, dass es sich mit einem der zugeordneten Oberwalzenelemente zumindest anteilig in die Höhenrichtung bewegt, weicht die dabei stattfindende Bewegung des Zwischenabdeckelementes von der Bewegung des Abdeckelementes ab. Mittels der Lagerungsanordnung ist das Zwischenabdeckelement bevorzugt mechanisch mit dem Abdeckelement oder dem Oberwalzenelement gekoppelt. Alternativ oder zusätzlich ist bevorzugt ein Sensor zur Überwachung der Position zumindest eines Teils der Lagerungsanordnung, des Oberwalzenelementes oder des Abdeckelementes vorgesehen. Besonders bevorzugt ist die Position des Zwischenabdeckelementes in Abhängigkeit von der überwachten Position, insbesondere durch einen dafür vorgesehenen Zwischenabdeckelementaktor, einzustellen. Der Zwischenabdeckelementaktor ist vorzugsweise zwischen der Rahmenvorrichtung und dem Zwischenabdeckelement angeordnet. Durch das Zwischenabdeckelement ist jedenfalls die Möglichkeit gegeben, die zumindest eine Walzenausnehmung zuverlässig in unterschiedlichen Betriebssituationen zu verschließen.

Vorzugsweise ist die Lagerungsanordnung zu einer Bewegung des Zwischenabdeckelementes in Abhängigkeit von einer, insbesondere von der Drehbewegung unabhängigen, Bewegung zumindest eines der Oberwalzenelemente ausgebildet. Diese Bewegung ergibt sich im Betrieb insbesondere allein durch die Rotation des Oberwalzenelementes und die Dicke des geförderten Erntegutstroms. Die Bewegung des Zwischenabdeckelementes ist dabei besonders bevorzugt zumindest anteilig, insbesondere ausschließlich in die Höhenrichtung gerichtet, wobei die Bewegung Teil eines komplexen und nicht notwendigerweise nur translatorischen Bewegungsablaufes sein kann. Die Bewegung des Oberwalzenelementes ist besonders bevorzugt zumindest anteilig in die Höhenrichtung und/oder parallel zur Bewegung des Zwischenabdeckelementes ausgerichtet. Die Bewegungen sind als Relativbewegungen in Bezug auf die Rahmenvorrichtung zu verstehen. Alternativ sind zumindest anteilig gegenläufige Bewegungen von Zwischenabdeckelement und Oberwalzenelement und/oder eine, eine Schwenkbewegung des Zwischenabdeckelementes einschließende, Bewegung denkbar. Die Lagerungsanordnung ist insbesondere zu einer Zwangsbewegung oder Zwangsführung des Zwischenabdeckelementes in Abhängigkeit von der Bewegung des Oberwalzenelementes ausgebildet.

Die Lagerungsanordnung ist vorzugsweise derart zu einer Untersetzung der Bewegung des zumindest eines Oberwalzenelementes ausgebildet, dass im Betrieb eine Bewegung des zumindest einen Oberwalzenelementes um eine erste Strecke eine Bewegung des Zwischenabdeckelementes um eine zweite Strecke bewirkt, die kleiner als die erste Strecke ist. Die Strecken werden insbesondere in dieselbe Richtung, bevorzugt in die Höhenrichtung, gemessen. Die erste Strecke ist insbesondere eine Strecke, die die Drehachse des Oberwalzenelementes zurücklegt. Die zweite Strecke bezieht sich auf zumindest einen bestimmten Punkt des Zwischenabdeckelementes. Die Lagerungsanordnung ist insbesondere derart zur Untersetzung ausgebildet, dass im Betrieb die zweite Strecke größer als halb so groß ist wie die erste Strecke. Durch die vorbeschriebene Untersetzung ist es auf konstruktiv einfache und damit zuverlässige Weise möglich, sowohl oberhalb als auch unterhalb der Drehachse des jeweiligen durch die Walzenausnehmung ragenden Oberwalzenelementes auftretende Abschnitte der Walzenausnehmung, die vom Abdeckelement nicht abgedeckt werden können, durch das Zwischenabdeckelement abzudecken, insbesondere ohne dass eine gegenläufige Bewegung oder eine Drehbewegung nötig ist.

Die Lagerungsanordnung umfasst zur Lagerung des Zwischenabdeckelementes bevorzugt eine Lenkeranordnung, die einen ersten Lenker, einen zweiten Lenker und einen dritten Lenker umfasst. Der erste Lenker ist einenends an der Rahmenvorrichtung und anderenends am zweiten Lenker angeordnet. Der dritte Lenker ist einenends am zweiten Lenker und anderenends an einem Teil der Lagerungsanordnung angeordnet an/in dem zumindest eines der Oberwalzenelemente, bevorzugt ausschließlich, drehbar gelagert ist. Bei dem Teil handelt es sich insbesondere um ein erstes Schwingenelement. Zwischen dem ersten Lenker und dem dritten Lenker ist das Zwischenabdeckelement am zweiten Lenker angeordnet. Die vorbeschriebenen Anordnungen verstehen sich jeweils bevorzugt als schwenkbewegliche Lagerungen. Durch die Lenkeranordnung ist die vorbeschriebene Beweglichkeit des Zwischenabdeckelementes besonders einfach und damit zuverlässig umgesetzt.

Das Zwischenabdeckelement ist vorzugsweise zur Abdeckung einer ersten Walzenausnehmung, einer zweiten Walzenausnehmung und insbesondere einer dritten Walzenausnehmung eingerichtet. Insbesondere weist die Abdeckeinrichtung pro Seitenwandung genau ein Zwischenabdeckelement auf, das besonders bevorzugt zur Abdeckung sämtlicher in der Seitenwandung befindlicher Walzenausnehmungen ausgebildet ist. Dadurch ist die Konstruktion weiter vereinfacht.

Das Zwischenabdeckelement weist bevorzugt zumindest eine derartig ausgebildete Zusatzwalzenausnehmung auf, dass zumindest eines der Oberwalzenelemente innerhalb der Zusatzwalzenausnehmung relativ zum Zusatzsatzabdeckelement zumindest in die Höhenrichtung beweglich ist. Ähnlich wie die Seitenwandung die Walzenausnehmungen aufweist, weist hiermit das Zwischenabdeckelement die Zusatzwalzenausnehmungen auf, um einerseits die Oberwalzenelemente vollständig zu umgeben und damit die Walzenausnehmungen bestmöglich abzudecken und andererseits die Relativbewegung der Oberwalzenelemente relativ zum Zwischenabdeckelement zu ermöglichen.

Das Zwischenabdeckelement und/oder das zumindest eine Abdeckelement sind/ist bevorzugt in die zur Einzugsrichtung rechtwinklige Querrichtung zwischen dem Einzugskanal und der Seitenwandung angeordnet. Insbesondere liegt das Zwischenabdeckelement oder das Abdeckelement unmittelbar an der Seitenwandung an. Das Zwischenabdeckelement ist besonders bevorzugt in Querrichtung zwischen dem zumindest einen Abdeckelement und dem Einzugskanal angeordnet. Insbesondere im Falle einer Erstreckung des Zwischenabdeckelementes über mehrere oder sämtliche der Walzenausnehmungen lassen sich durch diesen Aufbau der Abdeckeinrichtung an den Einzugskanal angrenzende Kanten oder Vorsprünge, die die Förderung des Erntegutes in die Einzugsrichtung erschweren können, auf ein Minimum reduzieren.

Vorzugsweise ist das Abdeckelement zur Abdeckung zumindest zweier Walzenausnehmungen ausgebildet. Alternativ oder zusätzlich umfasst die Abdeckeinrichtung zumindest zwei Abdeckelemente. Besonders bevorzugt weist die Abdeckeinrichtung ein erstes Abdeckelement zur Abdeckung einer ersten Walzenausnehmung und ein zweites Abdeckelement zur Abdeckung einer zweiten Walzenausnehmung und insbesondere einer dritten Walzenausnehmung auf. Das zweite Abdeckelement umgibt dabei bevorzugt sowohl das zweite Oberwalzenelement als auch das dritte Oberwalzenelement. Das erste Abdeckelement weist bevorzugt zwei in die Querrichtung abstehende Verbindungselemente zu seiner Lagefixierung am Schwingenelement auf. Durch die vorbeschriebene Aufteilung der Abdeckeinrichtung ist für den beabsichtigten Bewegungsspielraum der Oberwalzenelemente ein besonders praktikabler Kompromiss zwischen bestmöglicher Abdichtung der Walzenausnehmungen und einem konstruktiv einfachen Aufbau erreicht.

Vorzugsweise weist die Lagerungsanordnung eine Führungsanordnung zur Führung des Zwischenabdeckelementes in die Höhenrichtung auf. Durch die Führungsanordnung ist insbesondere ein unbeabsichtigtes Verschwenken des Zwischenabdeckelementes um eine zur Querrichtung parallele Schwenkachse zu vermeiden. Die Führungsanordnung umfasst zumindest ein Führungselement, insbesondere zwei Führungselement, das/die am Zusatzelement angeordnet sind. Das zumindest eine Führungselement erstreckt sich besonders bevorzugt in oder durch eine Zwischenabdeckelementausnehmung in der Seitenwandung. Auf der vom Einzugskanal abgewandten Seite der Seitenwandung ist insbesondere zumindest eine Führungsschiene angeordnet, die sich zumindest anteilig in die Höhenrichtung erstreckt und im Betrieb mit dem zumindest einen Führungselement zusammenwirkt. Das Führungselement weist insbesondere eine relativ zum Zwischenabdeckelement drehbar gelagerte Führungsrolle auf. Bei der Zwischenabdeckelementausnehmung handelt es sich insbesondere um ein sich in die Höhenrichtung länglich erstreckendes Langloch, wobei die Zwischenabdeckelementausnehmung insbesondere zwischen zwei Walzenausnehmungen angeordnet ist. Auf diese Weise ist die beabsichtigte Bewegung des Zwischenabdeckelementes sichergestellt.

Zur Lagerung der Oberwalzenelemente weist die Lagerungsanordnung zumindest das erste Schwingenelement auf, an dem die Oberwalzenelemente bevorzugt ausschließlich drehbar gelagert sind. Vorzugsweise weist die Lagerungsanordnung ein zweites Schwingenelement auf, das schwenkbeweglich an der Rahmenvorrichtung und schwenkbeweglich um eine Schwingenschwenkachse an dem ersten Schwingenelement angeordnet ist. Das zweite Schwingenelement ist insbesondere in die Einzugsrichtung versetzt zum ersten Schwingenelement angeordnet. Die Schwenkbeweglichkeit des ersten Schwingenelementes und/oder des zweiten Schwingenelementes ist bevorzugt durch zumindest einen Gummipuffer begrenzt. Die Schwingenschwenkachse ist insbesondere koaxial mit einer Drehachse eines der Oberwalzenelemente ausgebildet. Das zumindest eine Abdeckelement ist bevorzugt ortsfest zu oder an dem ersten Schwingenelement angeordnet. Die mit den beiden Schwingenelementen ausgebildete Lagerungsanordnung führt zumindest für einen Teil der Oberwalzenelemente dazu, dass sie, wiederum abgesehen von ihrer Drehbewegung, in zwei unterschiedliche Richtungen beweglich sind, je nachdem, wie die Schwenkbewegung der Schwingenelemente kombiniert wird. Dadurch ist bestmöglich auf das Erntegut und die gewünschten Schnittlängen zu reagieren.

Zwischen dem Einzugskanal und dem zumindest einen Abdeckelement und/oder dem Einzugskanal und dem Zwischenabdeckelement ist bevorzugt ein relativ zur Rahmenvorrichtung ortsfest angeordnetes Leitelement angeordnet. Das Leitelement erstreckt sich vorzugsweise zwischen zumindest einem Teil der Oberwalzenelemente und zumindest einem Teil der Unterwalzenelemente hindurch in die Einzugsrichtung. Das Leitelement erstreckt sich insbesondere über eine Unterkante des Zwischenabdeckelementes hinweg. Das Leitelement erstreckt sich insbesondere flächig parallel zur Seitenwandung. Das Leitelement deckt die Abdeckeinrichtung zum Teil von innen ab und erleichtert damit erheblich den Erntegutfluss. Die Lagerungsanordnung ist zur Erleichterung des Gutflusses bevorzugt vollständig außerhalb des Einzugskanals angeordnet. Die Lenkeranordnung ist besonders bevorzugt zwischen dem ersten Schwingenelement und der Seitenwandung angeordnet.

Das Leitelement weist an einem Einzugskanaleingang bevorzugt einen Querleitabschnitt auf, der vom Einzugskanal abgewandt in die Querrichtung über das Zwischenabdeckelement, das zumindest eine Abdeckelement und/oder die Seitenwandung zumindest teilweise oder vollständig übersteht. Der Querleitabschnitt erleichtert dem Erntegut das Eintreten in den Einzugskanal insofern, als es sich nicht an beweglichen Vorderkanten des Zwischenabdeckelementes, des Abdeckelementes oder zumindest einem Teil der Seitenwandung verfangen kann. Das Zwischenabdeckelement und/oder das Leitelement weisen/weist zumindest eine, insbesondere pro Unterwalzenelement eine, konkave Ausnehmung auf. Alternativ ist vereinfacht bevorzugt zumindest eine Unterkante des Zwischenabdeckelementes an den Unterwalzenelementen entlang zumindest abschnittsweise zumindest im Wesentlichen gerade, d.h. ohne konkave Ausnehmungen, ausgebildet. Innerhalb jeder konkaven Ausnehmung ist zumindest in einer Stellung der Lagerungsanordnung zumindest ein Teil eines der Unterwalzenelemente angeordnet. So ist der im Bereich der Unterwalzenelemente zur Verfügung stehende Platz bestmöglich und zugunsten der optimalen Abdeckung der Walzenausnehmungen ausgenutzt.

Die Aufgabe wird weiterhin gelöst durch einen Feldhäcksler mit der vorbeschriebenen Einzugsvorrichtung. Insbesondere schließt in die Einzugsrichtung an die Einzugsvorrichtung eine mit Messern versehene Häckseltrommel zum Schneiden des Erntegutes an.

Weitere Einzelheiten und Vorteile der Erfindung sind den nachfolgend beschriebenen, schematisch dargestellten Figuren zu entnehmen; es zeigen:
- Fig. 1: eine erfindungsgemäße Einzugsvorrichtung in einer perspektivischen Ansicht,
- Fig. 2: die Einzugsvorrichtung gemäß Fig. 1 in einer Explosionsdarstellung,
- Fig. 3a - 3h: einzelne Komponenten der Einzugsvorrichtung gemäß Fig. 1 in Seitenansichten,
- Fig. 4: die Einzugsvorrichtung gemäß Fig. 1 mit einer Lagerungsanordnung in einer Mittelstellung in einer Seitenansicht,
- Fig. 5: einen Teil der Einzugsvorrichtung gemäß Fig. 1 in einer perspektivischen Ansicht,
- Fig. 6: die Einzugsvorrichtung gemäß Fig. 1 mit der Lagerungsanordnung in einer Unterstellung in einer Seitenansicht,
- Fig. 7: die Einzugsvorrichtung gemäß Fig. 1 mit der Lagerungsanordnung in einer Oberstellung in einer Seitenansicht,
- Fig. 8: die Einzugsvorrichtung gemäß Fig. 1 mit der Lagerungsanordnung in einer weiteren Stellung in einer Seitenansicht.

Ähnlich oder gleich wirkende Komponenten sind mit identischen Bezugsziffern versehen. Die nachbeschriebenen Merkmale können auch anders als zeichnerisch dargestellt zu erfindungsgemäßen Weiterbildungen kombiniert werden.

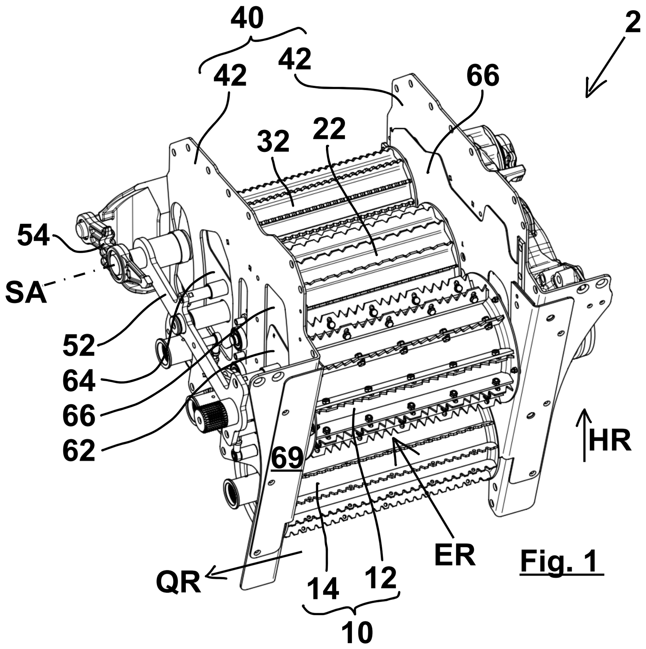

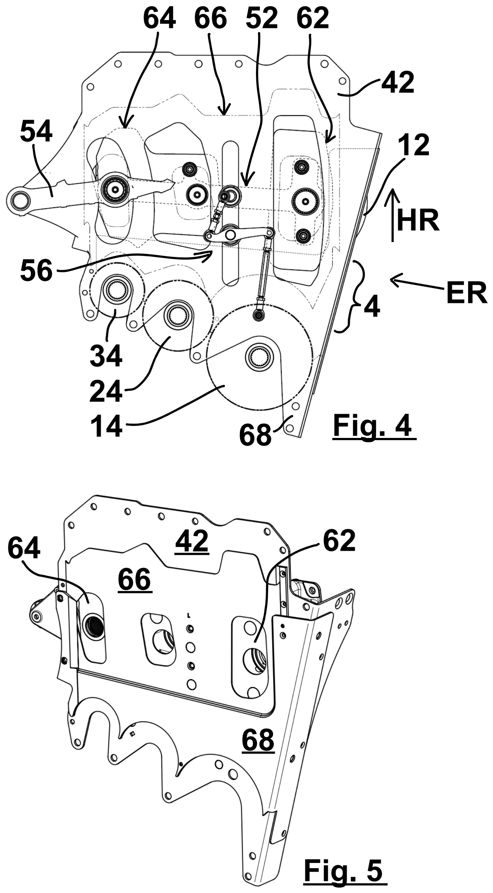

Eine erfindungsgemäße Einzugsvorrichtung 2 ist in Fig. 1 insgesamt perspektivisch dargestellt. Die Einzugsvorrichtung 2 dient zur Förderung von landwirtschaftlichem Erntegut in eine Einzugsrichtung ER und durch einen Einzugskanal 4 (sh. Fig. 4 ff.), der sich unter anderem durch ein ersten Oberwalzenelement 12 und ein erstes Unterwalzenelement 14, die gemeinsam ein ersten Einzugswalzenpaar 10 ausbilden, hindurcherstreckt. In die Einzugsrichtung ER folgen auf das erste Einzugswalzenpaar 10 zwei weitere Einzugswalzenpaare 20, 30, die wiederum je ein Oberwalzenelement 22, 32 und ein Unterwalzenelement 24, 34 aufweisen.

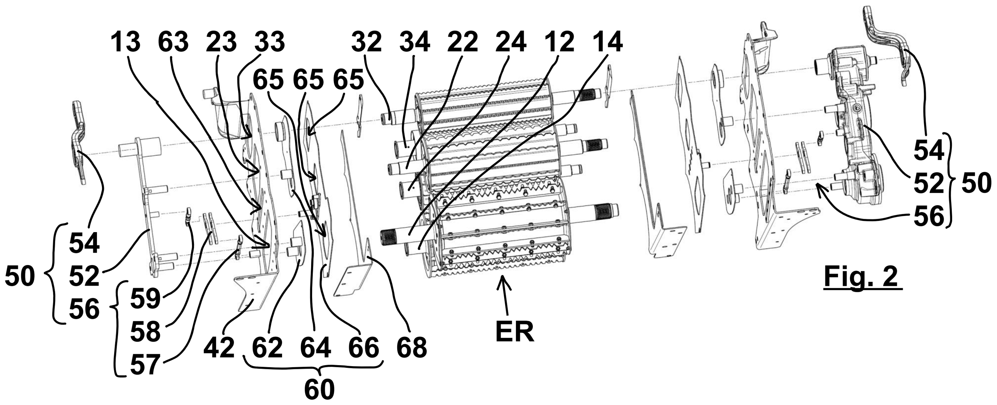

Seitlich begrenzt ist der Einzugskanal 4 durch zwei Seitenwandungen 42, die von einer Rahmenvorrichtung 40 umfasst sind. Die Oberwalzenelemente 12, 22, 32 erstrecken sich seitlich durch je eine Walzenausnehmung 13, 23, 33 in den Seitenwandungen 42 hindurch. Die Walzenausnehmungen 13, 23, 33 (sh. insbesondere Fig. 2, die der Übersichtlichkeit halber bei dem im Wesentlichen spiegelsymmetrischen Aufbau der Einzugsvorrichtung nur einseitig vollständig beschriftet ist, und 3c) sind derart groß, dass sie eine Bewegung der Oberwalzenelemente 12, 22, 32 in eine zur Einzugsrichtung ER angewinkelte Höhenrichtung HR relativ zur Rahmenvorrichtung 40 erlauben. Zur Vermeidung eines Entweichens von Erntegut aus dem Einzugskanal 4 durch die Walzenausnehmungen 13, 23, 33 dient eine Abdeckeinrichtung 60.

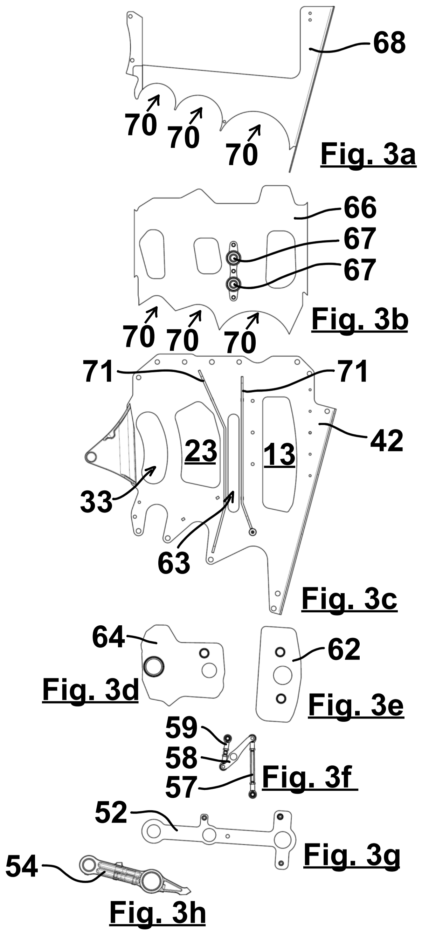

Die Abdeckeinrichtung 60 weist ein erstes Abdeckelement 62 und ein zweites Abdeckelement 64 auf (sh. Fig. 3e u. 3d), die im Betrieb an der Seitenwandung 42 anliegen. Das erste Abdeckelement 62 dient zur Abdeckung einer ersten der Walzenausnehmungen 13. Das zweite Abdeckelement dient im Betrieb zur Abdeckung sowohl einer zweiten der Walzenausnehmungen 23 als auch einer dritten der Walzenausnehmungen 33. Neben den beiden Abdeckelementen 62, 64 umfasst die Abdeckeinrichtung 60 ein Zwischenabdeckelement 66, das an den Abdeckelementen 62, 64 anliegt und zur Abdeckung sämtlicher Walzenausnehmungen 13, 23, 33 ausgebildet ist. Das Zwischenabdeckelement 66 weist eine Zusatzwalzenausnehmung 65 pro Oberwalzenelement 12, 22, 32 auf.

An dem Zwischenabdeckelement 66 liegt innen ein relativ zur Rahmenvorrichtung 40 ortsfestes Leitelement 68 an. Das Leitelement 68 erstreckt sich zwischen den Oberwalzenelementen 12, 22, 32 und den Unterwalzenelementen 14, 24, 34 hindurch in die Einzugsrichtung ER. Das Leitelement 68 weist an einem Einzugskanaleingang einen Querleitabschnitt 69 auf, der vom Einzugskanal 4 abgewandt in eine Querrichtung QR über das Zwischenabdeckelement 66 und das erste Abdeckelement 62 übersteht. Das Zwischenabdeckelement 66 und das Leitelement 68 weisen pro Unterwalzenelement 14, 24, 34 eine konkave Ausnehmung 70 auf (sh. Fig. 3a u. 3b).

Eine Lagerungsanordnung 50 dient zur Lagerung der Oberwalzenelemente 12, 22, 32 und der Bestandteile der Abdeckeinrichtung 60. Das Zwischenabdeckelement 66 ist derart gelagert, dass es relativ zur Rahmenvorrichtung 40 und relativ zu den Abdeckelementen 62, 64 beweglich gelagert ist. An dem Zwischenabdeckelement 66 sind zwei Führungselemente 67 angeordnet (sh. Fig. 3b), die sich durch eine Zwischenabdeckelementausnehmung 63 in der Seitenwandung 42 erstrecken. Die Führungselemente 67 weisen Führungsrollen auf, die zur Führung des Zwischenabdeckelementes 66 in die Höhenrichtung HR außen an der Seitenwandung 42 angeordneten Führungsschienen 71 abrollen (sh. Fig. 3c).

Die Lagerungsanordnung 50 weist zur Lagerung der Oberwalzenelemente 12, 22, 32 ein erstes Schwingenelement 52 und ein zweites Schwingenelement 54 auf. An dem ersten Schwingenelement 52 (sh. Fig. 3g) sind die Oberwalzenelemente 12, 22, 32 drehbar gelagert. Das zweite Schwingenelement (sh. Fig. 3h) ist einerseits schwenkbeweglich an der Rahmenvorrichtung 40 und andererseits schwenkbeweglich um eine Schwingenschwenkachse SA am ersten Schwingenelement 52 gelagert. Die Schwingenschwenkachse SA fällt mit einer Rotationsachse des dritten Oberwalzenelementes 32 zusammen.

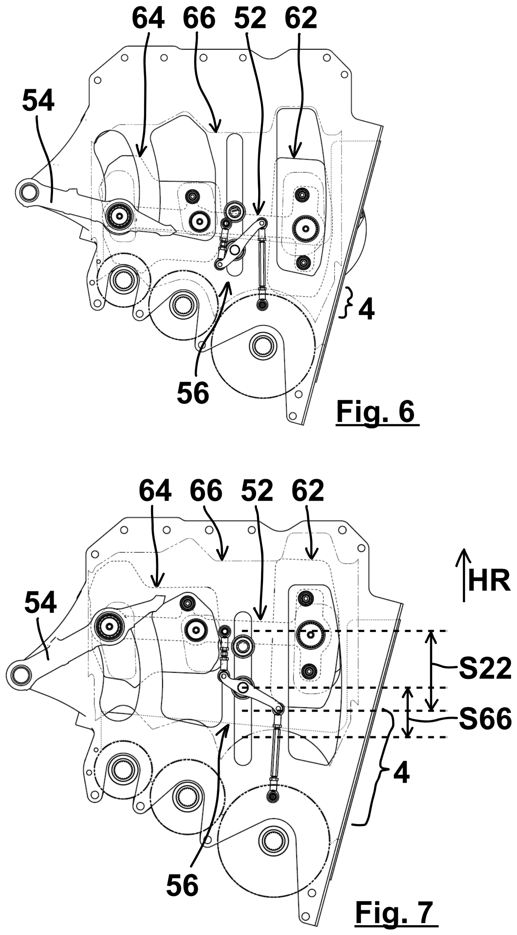

Die Lagerungsanordnung 50 ist zu einer Zwangsbewegung des Zwischenabdeckelementes 66 in die Höhenrichtung HR in Abhängigkeit von einer Bewegung des ersten Schwingenelementes 52 zumindest anteilig in die Höhenrichtung HR ausgebildet. Dabei ist die Lagerungsanordnung 50 mittels einer Lenkeranordnung 56 zu einer Untersetzung der Bewegung des ersten Schwingenelementes 52 zum Zwischenabdeckelement 66 ausgebildet. Die Lenkeranordnung 56 (sh. Fig. 3f) weist einen ersten Lenker 57, einen zweiten Lenker 58 und einen dritten Lenker 59 auf. Der erster Lenker 57 ist einenends an der Rahmenvorrichtung 40 und anderenends am zweiten Lenker 58 angeordnet. Der dritte Lenker 59 ist einenends am zweiten Lenker 58 und anderenends an dem ersten Schwingenelement 52 angeordnet, das Zwischenabdeckelement 66 ist zwischen dem ersten Lenker 57 und dem dritten Lenker 59 am zweiten Lenker 58 angeordnet. Durch die Lenkeranordnung 56 wird die Bewegung derart untersetzt, dass im Betrieb eine Bewegung des ersten Schwingenelementes 52 um eine erste Strecke S22 in die Höhenrichtung HR eine Bewegung des Zwischenabdeckelementes 66 um eine zweite Strecke S66 in die Höhenrichtung bewirkt, die kleiner ist als die erste Strecke S22, jedoch größer als halb so groß ist wie die erste Strecke S22 (sh. Fig. 7).

Die Fig. 4 ff. veranschaulichen unterschiedliche Stellungen der Lagerungsanordnung 50. Verdeckte Konturen eines Teils der Komponenten der Einzugsvorrichtung 2 sind durch Strich- und Strich-Punktlinien veranschaulicht.

In Fig. 4 ist die Lagerungsanordnung 50 in einer Mittelstellung dargestellt, in der die Drehachsen der Oberwalzenelemente 12, 22, 32 in Bezug auf die Höhenrichtung HR etwa mittig innerhalb der Walzenausnehmungen 13, 23, 33 angeordnet sind, wobei das Zwischenabdeckelement 66 sämtliche Walzenausnehmungen 13, 23, 33 vollständig abdeckt. Fig. 5 ist eine teilweise Darstellung der Einzugsvorrichtung 2 mit der Lagerungsanordnung 50 in der Mittelstellung gemäß Fig. 4.

Fig. 6 stellt die Einzugsvorrichtung 2 mit der Lagerungsanordnung 50 in einer Unterstellung dar, in der die Oberwalzenelemente 12, 22, 32 und die Unterwalzenelemente 14, 24, 34 einander am nächsten sind. Dabei erstrecken sich die Unterwalzenelemente 14, 24, 34 teilweise in den Ausnehmungen 70 des Zwischenabdeckelementes 66.

Fig. 7 stellt die Einzugsvorrichtung 2 mit der Lagerungsanordnung 50 in einer Oberstellung dar, in der die Oberwalzenelemente 12, 22, 32 einen maximalen Abstand von den Unterwalzenelementen 14, 24, 34 haben. In der Mittelstellung der Lagerungsanordnung 50 gemäß Fig. 4, der Unterstellung der Lagerungsanordnung 50 gemäß Fig. 6 und der Oberstellung der Lagerungsanordnung 50 gemäß Fig. 7 ist das erste Schwingenelement 52 zwar auf unterschiedlichen Höhen angeordnet, jedoch jeweils relativ zur Rahmenvorrichtung 40 gleich ausgerichtet dargestellt.

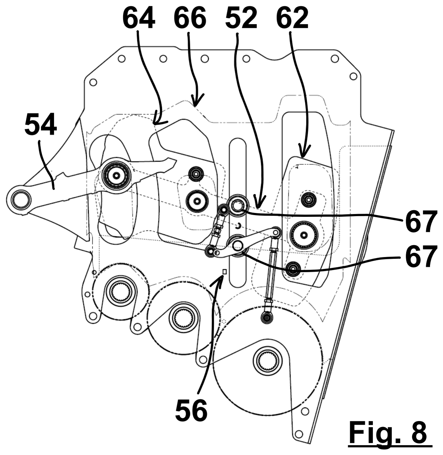

Fig. 8 stellt die Einzugsvorrichtung 2 mit der Lagerungsanordnung 50 in einer weiteren Stellung dar, in der das erste Schwingenelement 52 im Kontrast zu seiner Anordnung gemäß den Fig. 4, 6 und 7 relativ zur Rahmenvorrichtung 40 angewinkelt ausgerichtet ist. Dabei fällt auf, dass das erste Abdeckelement 62 und das zweite Abdeckelement 64 gleichermaßen angewinkelt angeordnet sind, wohingegen das Zwischenabdeckelement 66 relativ zur Rahmenvorrichtung 40 durch die Führungsanordnung, von der keine Führungsschiene dargestellt ist, ausschließlich translatorisch in die Höhenrichtung HR beweglich ist.

## Patentansprüche

1. Einzugsvorrichtung (2) für einen Feldhäcksler, die zur Förderung von landwirtschaftlichem Erntegut in eine Einzugsrichtung (ER) durch einen Einzugskanal (4) ausgebildet ist und
- eine Rahmenvorrichtung (40), die zumindest eine Seitenwandung (42) zur seitlichen Begrenzung des Einzugskanals (4) umfasst,
- zumindest zwei Einzugswalzenpaare (10, 20, 30), die zur Begrenzung des Einzugskanals jeweils ein drehbar gelagertes Oberwalzenelement (12, 22, 32), das sich seitlich durch zumindest eine Walzenausnehmung (13, 23, 33) in der Seitenwandungen (42) erstreckt, und ein drehbar gelagertes Unterwalzenelement (14, 24, 34) umfassen und die in die Einzugsrichtung (ER) versetzt zueinander angeordnet sind,
- eine Lagerungsanordnung (50), die zu einer derartigen Lagerung der Oberwalzenelemente (12, 22, 32) ausgebildet ist, dass sie zu einer Variation einer Höhe des Einzugskanals (4) relativ zur Rahmenvorrichtung (40) zumindest anteilig in eine zur Einzugsrichtung (ER) angewinkelte Höhenrichtung (HR) beweglich sind, und
- eine Abdeckeinrichtung (60), die zumindest ein mittels der Lagerungsanordnung (50) relativ zur Rahmenvorrichtung (40) bewegliches Abdeckelement (62, 64) zur Abdeckung zumindest eines Teils der zumindest einen Walzenausnehmung (13, 23, 33) aufweist,
umfasst,
**dadurch gekennzeichnet, dass** die Abdeckeinrichtung (60) zumindest ein Zwischenabdeckelement (66) zur Abdeckung der zumindest einen Walzenausnehmung (13, 23, 33) umfasst, das mittels der Lagerungsanordnung (50) relativ zur Rahmenvorrichtung (40) und relativ zum Abdeckelement (62, 64) beweglich gelagert ist.

2. Einzugsvorrichtung nach einem der vorhergehenden Ansprüche, **dadurch gekennzeichnet, dass** die Lagerungsanordnung (50) zu einer Bewegung des Zwischenabdeckelementes (66) zumindest anteilig in die Höhenrichtung (HR) in Abhängigkeit von einer Bewegung zumindest eines der Oberwalzenelemente (12, 22, 32) zumindest anteilig in die Höhenrichtung (HR) ausgebildet ist.

3. Einzugsvorrichtung nach einem der vorhergehenden Ansprüche, **dadurch gekennzeichnet, dass** die Lagerungsanordnung (50) derart zu einer Untersetzung der Bewegung des zumindest einen Oberwalzenelementes (12, 22, 32) ausgebildet ist, dass im Betrieb eine Bewegung des zumindest einen Oberwalzenelementes (12, 22, 32) um eine erste Strecke (S22) eine Bewegung des Zwischenabdeckelementes (66) um eine zweite Strecke (S66) bewirkt, die kleiner ist als die erste Strecke (S22).

4. Einzugsvorrichtung nach einem der vorhergehenden Ansprüche, **dadurch gekennzeichnet, dass** die Lagerungsanordnung (50) derart zur Untersetzung ausgebildet ist, dass im Betrieb die zweite Strecke (S66), um die das Zwischenabdeckelement (66) bewegt wird, größer als halb so groß ist wie die erste Strecke (S22), um die das zumindest eine Oberwalzenelement (22) sich bewegt.

5. Einzugsvorrichtung nach einem der vorhergehenden Ansprüche, **dadurch gekennzeichnet, dass** die Lagerungsanordnung (50) zur Lagerung des Zwischenabdeckelementes (66) eine Lenkeranordnung (56) umfasst, die einen ersten Lenker (57), einen zweiten Lenker (58) und einen dritten Lenker (59) aufweist, wobei der erste Lenker (57) einenends an der Rahmenvorrichtung (40) und anderenends am zweiten Lenker (58) angeordnet ist, der dritte Lenker (59) einenends am zweiten Lenker (58) und anderenends an einem Schwingenelement (52), an dem zumindest eines der Oberwalzenelemente (12, 22, 32) drehbar gelagert ist, angeordnet ist und zwischen dem ersten Lenker (57) und dem dritten Lenker (59) das Zwischenabdeckelement (66) am zweiten Lenker (58) angeordnet ist.

6. Einzugsvorrichtung nach einem der vorhergehenden Ansprüche, **dadurch gekennzeichnet, dass** die Abdeckeinrichtung (60) einen Sensor zur Überwachung der Position zumindest eines Teils der Lagerungsanordnung (50), zumindest eines der Oberwalzenelemente (12, 22, 32) und/oder des Abdeckelementes (62, 64) und einen Aktor zur Einstellung der Position des Zwischenabdeckelementes (66) in Abhängigkeit von der überwachten Position aufweist.

7. Einzugsvorrichtung nach einem der vorhergehenden Ansprüche, **dadurch gekennzeichnet, dass** das Zwischenabdeckelement (66) zur Abdeckung einer ersten Walzenausnehmung (13), einer zweiten Walzenausnehmung (23) und insbesondere einer dritten Walzenausnehmung (33) eingerichtet ist.

8. Einzugsvorrichtung nach einem der vorhergehenden Ansprüche, **dadurch gekennzeichnet, dass** das Zwischenabdeckelement (66) zumindest eine derartig ausgebildete Zusatzwalzenausnehmung (65) aufweist, dass zumindest eines der Oberwalzenelemente (12, 22, 32) innerhalb der Zusatzwalzenausnehmung (65) relativ zum Zwischenabdeckelement (66) in die Höhenrichtung (HR) beweglich ist.

9. Einzugsvorrichtung nach einem der vorhergehenden Ansprüche, **dadurch gekennzeichnet, dass** das Zwischenabdeckelement (66) und/oder das zumindest eine Abdeckelement (62, 64) in eine zur Einzugsrichtung (ER) rechtwinklige Querrichtung (QR) zwischen dem Einzugskanal (4) und der Seitenwandung (42) angeordnet ist.

10. Einzugsvorrichtung nach einem der vorhergehenden Ansprüche, **dadurch gekennzeichnet, dass** das Zwischenabdeckelement (66) in eine zur Einzugsrichtung (ER) rechtwinklige Querrichtung (QR) zwischen dem zumindest einen Abdeckelement (62, 64) und dem Einzugskanal (4) angeordnet ist.

11. Einzugsvorrichtung nach einem der vorhergehenden Ansprüche, **dadurch gekennzeichnet, dass** die Lagerungsanordnung (50) eine Führungsanordnung zur Führung des Zwischenabdeckelementes (66) in die Höhenrichtung (HR) aufweist, wobei die Führungsanordnung zumindest ein, insbesondere zwei, am Zwischenabdeckelement (66) angeordnetes, Führungselement (67) umfasst, das sich in oder durch eine Zwischenabdeckelementausnehmung (63) in der Seitenwandung (42) erstreckt.

12. Einzugsvorrichtung nach einem der vorhergehenden Ansprüche, **dadurch gekennzeichnet, dass** die Lagerungsanordnung (50) zur Lagerung der Oberwalzenelemente (12, 22, 32) zumindest ein erstes Schwingenelement (52), an dem die Oberwalzenelemente (12, 22, 32) drehbar gelagert sind, und ein zweites Schwingenelement (54) aufweist, das schwenkbeweglich an der Rahmenvorrichtung (40) und schwenkbeweglich um eine Schwingenschwenkachse (SA) an dem ersten Schwingenelement (52) angeordnet ist.

13. Einzugsvorrichtung nach einem der vorhergehenden Ansprüche, **dadurch gekennzeichnet, dass** die Abdeckeinrichtung (60) ein erstes Abdeckelement (62) zur Abdeckung einer ersten Walzenausnehmung (13) und ein zweites Abdeckelement (64) zur Abdeckung einer zweiten Walzenausnehmung (23) und insbesondere einer dritten Walzenausnehmung (33) aufweist.

14. Einzugsvorrichtung nach einem der vorhergehenden Ansprüche, **dadurch gekennzeichnet, dass** zwischen dem Einzugskanal (4) und dem zumindest einen Abdeckelement (62, 64) und/oder dem Zwischenabdeckelement (66) ein relativ zur Rahmenvorrichtung (40) ortsfest angeordnetes Leitelement (68) angeordnet ist, das sich zwischen den Oberwalzenelementen (12, 22, 32) und den Unterwalzenelementen (14, 24, 34) hindurch in die Einzugsrichtung (ER) erstreckt.

15. Einzugsvorrichtung nach einem der vorhergehenden Ansprüche, **dadurch gekennzeichnet, dass** das Leitelement (68) an einem Einzugskanaleingang einen Querleitabschnitt (69) aufweist, der vom Einzugskanal (4) abgewandt in die Querrichtung (QR) über das Zwischenabdeckelement (66), das zumindest eine Abdeckelement (62, 64) und/oder die Seitenwandung (42) zumindest teilweise übersteht.

16. Einzugsvorrichtung nach einem der vorhergehenden Ansprüche, **dadurch gekennzeichnet, dass** das Zwischenabdeckelement (66) und/oder das Leitelement (68) zumindest eine, insbesondere pro Unterwalzenelement (14, 24, 34) eine, konkave Ausnehmung (70) aufweist, innerhalb derer zumindest in einer Stellung der Lagerungsanordnung (50) zumindest ein Teil eines der Unterwalzenelemente (14, 24, 34) angeordnet ist.
